Europäisches Patentamt

European Patent Office

Office européen des brevets

(11) Numéro de publication: **0 396 208**
**A2**

# (12) DEMANDE DE BREVET EUROPEEN

(21) Numéro de dépôt: **90201525.4**

(51) Int. Cl.⁵: **A01C 11/02**

(22) Date de dépôt: **21.04.87**

Cette demande a été déposée le 13 - 06 - 1990 comme demande divisionnaire de la demande mentionnée sous le code INID 60.

(30) Priorité: **23.04.86 FR 8606071**
**28.05.86 FR 8607914**

(43) Date de publication de la demande:
**07.11.90 Bulletin 90/45**

(60) Numéro de publication de la demande initiale en application de l'article 76 CBE : **0 243 264**

(84) Etats contractants désignés:
**DE ES GB IT**

(71) Demandeur: **ATELIERS DE CLAIRE FONTAINE**
**La Chapelle Basse Mer**
**F-44050 Saint-Julien De Concelles(FR)**

(72) Inventeur: **Simon, Gaston**
**Le Moulin de Claire Fontaine**
**F-44450 La Chapelle Basse Mer(FR)**

(74) Mandataire: **Phélip, Bruno et al**
**c/o Cabinet Harlé & Phélip 21, rue de La**
**Rochefoucauld**
**F-75009 Paris(FR)**

(54) **Perfectionnement aux machines de plantation de plants en mottes.**

(57) Machine permettant une plantation entièrement automatisée de plants de légumes ou de fleurs cultivés en mottes, particulièrement destinée aux exploitations dans lesquelles la culture s'effectue en planches séparées par des allées de circulation dites passe-pieds.

Elle se compose : - d'un ensemble porte-plateau (A) et d'extraction des mottes, - d'un ensemble (B) basculant et extensible de prise en charge et de transfert des mottes, - d'un ensemble (C) de convoyage en circuit fermé au moyen de godets suspendus ouvrants (56), débitant dans un dispositif (D) de retournement de plants, associés à un dispositif planteur (E) , lesquels dispositifs constitués chacun de deux disques (74-80) maintiennent respectivement au cours de leur transfert vers le sol, les plants par la motte et par le feuillage et assurent une parfaite verticalité de plantation à la profondeur désirée.

FIG.1

La présente invention concerne les machines destinées à réaliser de façon mécanique la plantation de plants cultivés en mottes dans des plateaux alvéolés, et plus particulièrement un perfectionnement au dispositif de convoyage et dépose des plants en terre.

La machine décrite notamment dans la demande initiale EP-87 400 919.4 permet d'effectuer une plantation entièrement automatisée, réduisant l'action de la seule personne affectée à cette machine à l'approvisionnement de celle-ci en plateaux à alvéoles garnies de mottes à planter. Cette machine du type semi-portée est constituée d'un ensemble châssis comportant un châssis principal équipé de roues porteuses, sur lequel sont montés un ou plusieurs châssis secondaires s'articulant sur ledit châssis principal de façon à permettre une régularité de profondeur de plantation quelles que soient la planéité de la planche de culture et la variation de hauteur de celle-ci par rapport aux passe-pieds sur lesquels circulent les roues porteuses du châssis principal, l'ensemble châssis ainsi constitué portant une ou plusieurs unités de plantation composées chacune :
- d'un ensemble porte-plateaux et d'extraction des mottes,
- d'un ensemble de prise en charge des mottes et de transfert,
- d'un ensemble de convoyage et de dépose des plants au sol,
- d'un ensemble de préparation et de ragréage du sol.

Les différentes phases successives depuis l'extraction des mottes du plateau jusqu'à la dépose des plants au sol étant commandées à partir d'un automate programmable. Ces différentes phases consistent dans un acheminement en translation des plateaux garnis de plants à l'aplomb d'une batterie de pinces de préhension espacées les unes des autres de la valeur d'écartement des alvéoles d'une même rangée du plateau, lesquelles pinces, après avoir prélevé chacune un plant par la motte, basculent tout en s'écartant les unes des autres pour atteindre un intervalle correspondant à celui des godets équipant le dispositif de convoyage à l'intérieur desquels godets les plants sont déposés par ouverture des pinces.

L'ensemble de convoyage et de dépose des plants au sol, décrit dans la demande initiale précitée, est constitué d'une chaîne de manutention portant suspendus à intervalles réguliers des nacelles ou godets ; et circulant en boucle fermée dans un plan incliné d'environ 30° par rapport à la verticale entre trois roues dentées selon une trajectoire triangulaire comportant une portion horizontale au cours de laquelle les godets sont chargés de plants et deux portions obliques concourant vers le point de largage au sol à l'aplomb duquel s'effectue l'ouverture du godet. Pour certains types de plants, il a été constaté une tendance de ceux-ci à se coucher dans le sillon de dépose préparé par l'ensemble de préparation au sol.

La présente invention a pour but de remédier à cet inconvénient. L'ensemble de convoyage et de dépose des plants au sol suivant l'invention assure une parfaite verticalité du plant en fond de sillon celui-ci étant refermé sitôt la dépose du plant. Un autre but de l'invention est de permettre de régler la profondeur de plantation de la motte.

L'ensemble de convoyage et de dépose des plants au sol, de la machine objet de l'invention, comprend un dispositif de retournement des plants, alimenté au moyen d'une chaîne de manutention en boucle fermée, qui porte à intervalles réguliers, une série de godets fixes de forme conique allongée, constitués de deux demi-parties, l'une fixe, l'autre ouvrante afin de permettre le largage du plant dans ledit dispositif de retournement.

Ce dispositif de retournement est constitué de deux disques en matière élastique formant flasques entre lesquels est comprise une couronne circulaire dont la largeur est très légèrement supérieure au diamètre de la motte. En amont du point de prise en charge de la motte, l'un des flasques, ou les deux, sont dévoyés vers l'extérieur à l'aide d'un ou de deux galets afin de faciliter l'introduction de la motte entre les flasques jusqu'à sa mise en appui sur la couronne circulaire, en aval dudit point de prise en charge de la motte, l'un des flasques vient en appui sur une portion de rampe circulaire fixe tandis que l'autre flasque est dévoyé vers l'intérieur afin d'assurer une bonne préhension de la motte au cours de son transfert vers un dispositif planteur également constitué de deux disques en matière élastique en contact l'un de l'autre entre lesquels est destiné à venir s'inscrire le feuillage du plant. A cet effet, en amont du point de prise en charge du feuillage, l'un des flasques ou les deux sont dévoyés vers l'extérieur à l'aide d'un ou de deux galets afin de faciliter l'introduction du feuillage entre les flasques ; en aval du point de prise en charge l'un des flasques vient en appui sur une portion de rampe circulaire fixe, l'autre flasque étant dévoyé vers l'intérieur afin d'assurer un serrage suffisant sur le feuillage au cours de son acheminement vers le sol. D'une telle disposition, il résulte que chaque plant occupe, dans l'un et l'autre de ces dispositifs de retournement et de plantation une position rayonnante par rapport aux centres de rotation de chaque dispositif et par conséquent une parfaite verticalité de plantation au sol. La profondeur de plantation de la motte dans le sol peut être adaptée à la nature du plant : la profondeur désirée s'obtient par réglage de l'entre axe entre les deux dispositifs, ainsi que par le réglage de position en hauteur du dispositif planteur par rapport au sol. La vitesse de défilement des godets est proportionnelle à la vitesse d'avancement de la machine, cette dernière étant supposée constante, la proportionnalité est établie en fonction du pas de pose désiré des plants et obtenue par l'intermédiaire d'un distributeur rotatif proportionnel du type orbitrol alimentant le moteur hydraulique d'entraînement de la chaîne de manutention portant les godets, lequel distributeur est en liaison avec l'une des roues porteuses du châssis par l'intermédiaire d'un variateur de vitesse mécanique. Selon la présente invention, la vitesse circonférencielle de la face d'appui des mottes sur la couronne circulaire comprise entre les deux flasques du dispositif de retournement est égale à la vitesse linéaire de défilement des godets par la liaison hydraulique entre le moteur d'entraînement en translation de la chaîne de manutention des godets et le moteur d'entraînement en rotation du dispositif de retournement. D'autre part, la vitesse circonférencielle du disque planteur est égale à la vitesse linéaire de déplacement de la machine, ceci étant assuré au moyen d'une liaison mécanique entre ledit dispositif et l'une des roues porteuses du châssis.

L'ensemble de convoyage, dans la machine objet de l'invention, est constitué d'une chaîne de manutention en boucle fermée dont la trajectoire se situe dans un plan horizontal, laquelle chaîne porte à intervalles réguliers une série de godets fixes de forme conique allongée, constitués de deux demi-parties, l'une fixe, l'autre ouvrante afin de permettre le largage du plant dans un dispositif de dépose au sol.

Les dessins annexés illustrent, à titre d'exemple, un mode de réalisation, d'une machine conforme à la présente invention. Ceux-ci représentent :

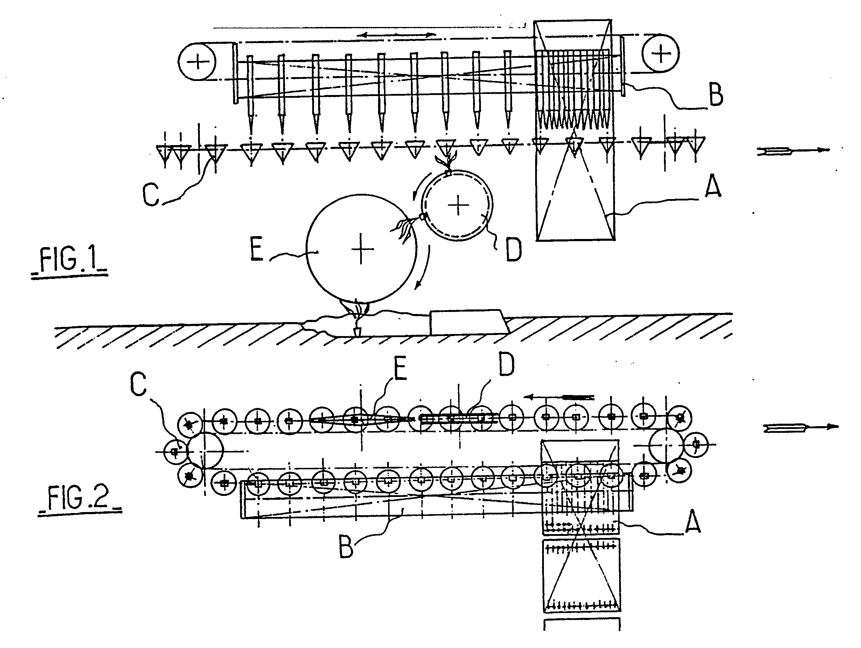

- en figures 1, 2 et 3, respectivement les vues en élévation, de dessus et transversale de l'arrière de la machine, le dessin se limitant à une représentation schématique du plan de translation des plateaux, du plan de translation des patins supports de pinces pour mise à écartement de ceux-ci et leur basculement, du plan de circulation des godets de l'ensemble de convoyage et du plan de rotation des dispositifs de retournement et de plantation,

- en figure 4, une vue transversale de l'arrière de la machine,

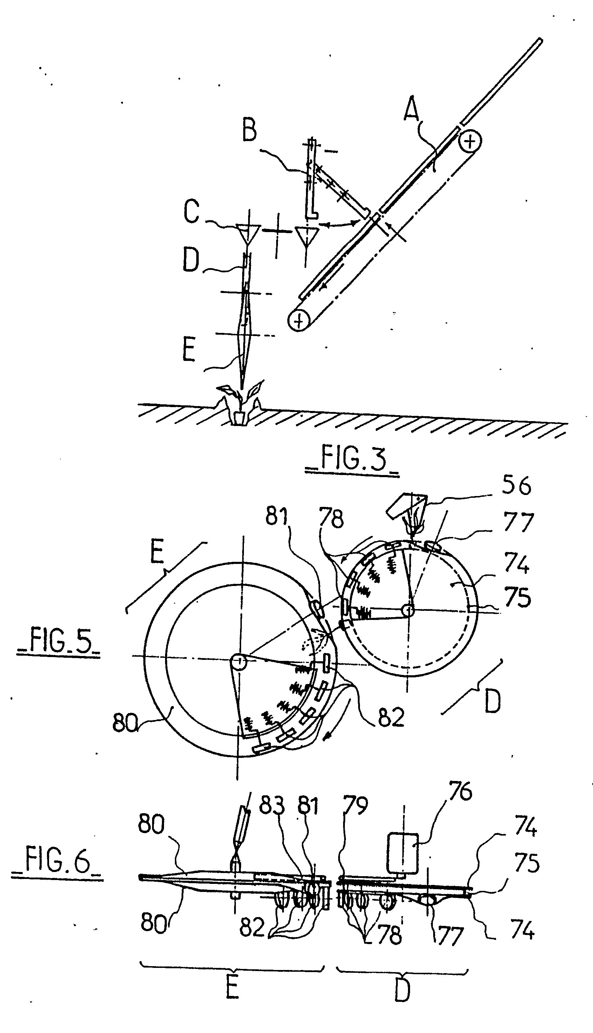

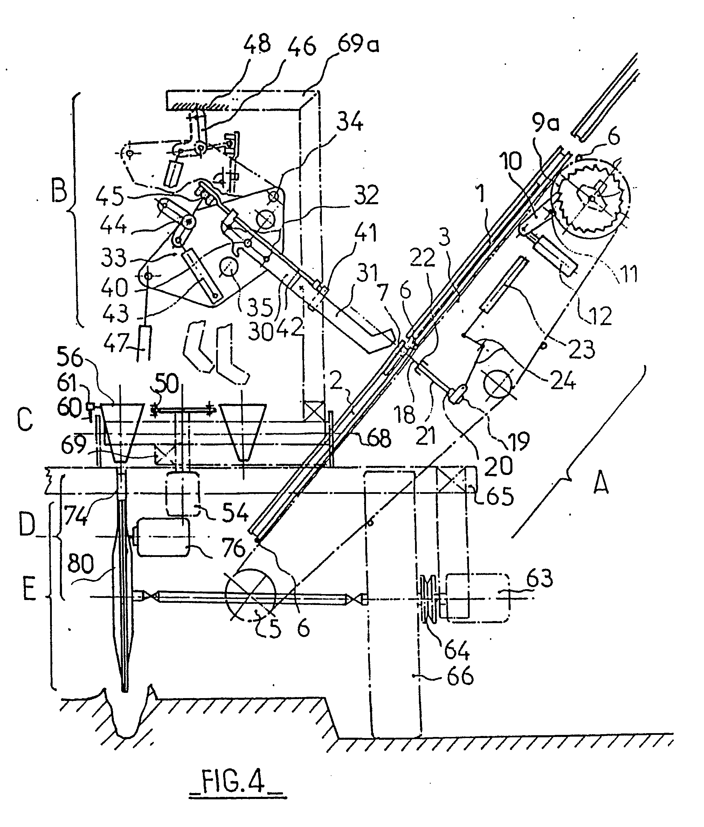

- en figures 5 et 6, des vues en élévation et de dessus de l'ensemble des dispositifs de retournement et de plantation,

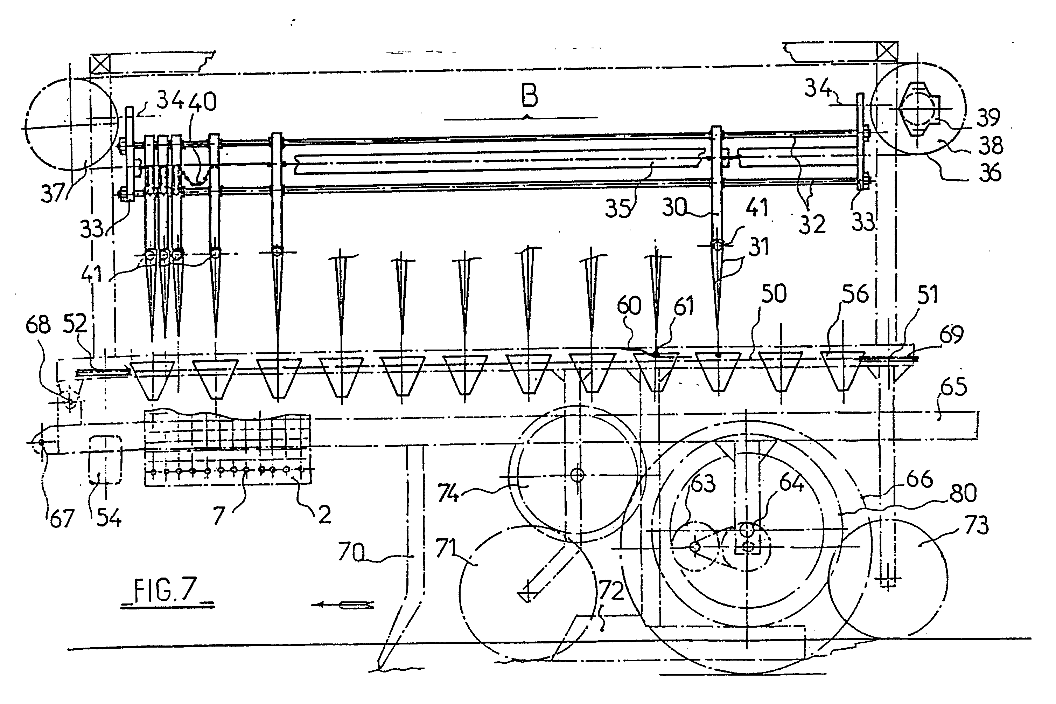

- en figure 7, une vue partielle en élévation de la machine montrant le mécanisme de mise à écartement des pinces pour largage des plants au-dessus des godets du dispositif de convoyage.

Telle que représentée, la machine comporte :

- un ensemble porte-plateaux A équipé du dispositif d'extraction des mottes,

- un ensemble B de prise en charge et de transfert des mottes,

- un ensemble C de convoyage des mottes alimentant selon l'invention :

- un dispositif D de retournement des plants,

- un dispositif E de plantation.

L'ensemble porte-plateaux A, l'ensemble B de prise en charge et de transfert des mottes, et un mode de réalisation de l'ensemble C de convoyage sont décrits dans la demande initiale précitée.

L'ensemble C de convoyage est, dans le mode de réalisation décrit ci-après, constitué d'une chaîne de manutention 50 circulant en boucle fermée dans un plan horizontal entre deux roues dentées libre 51 et motrice 52, cette dernière étant clavetée sur la sortie d'arbre d'un moteur hydraulique 54 alimenté par le distributeur rotatif proportionnel 63 du type orbitrol monté sur le châssis principal de la machine et en liaison mécanique avec l'une des roues porteuses au moyen d'un variateur de vitesse mécanique 64. Sur la chaîne de manutention sont montés à intervalles réguliers des godets 56 de forme tronconique allongée, en nombre, sur la longueur de trajectoire de la chaîne entre les deux axes des roues dentées, au moins égal au nombre de pinces, leur écartement correspondant à celui des pinces en position d'écartement maximum. Le sens de translation de la chaîne est tel que les godets circulent de l'arrière vers l'avant de la machine sur la partie de trajectoire située en-dessous du plan d'ouverture des pinces et de l'avant vers l'arrière de la machine sur la partie de trajectoire disposée au-dessus des dispositifs de retournement et de plantation. Les godets de forme pyramidale allongée, à base carrée, disposés pointe en bas sont constitués de deux demi-parties l'une fixe, l'autre mobile de façon à permettre l'ouverture du godet par pivotement autour d'un axe formant un angle de 45° avec la direction de défilement de la chaîne, la demi-partie ouvrante du godet étant celle qui est située en avant dans le sens du défilement. Cette ouverture est provoquée à l'aplomb du point de largage au-dessus du dispositif de retournement D par la mise en appui sur une rampe de guidage fixe 60 d'un galet 61 solidaire de la demi-partie ouvrante.

Le dispositif de retournement D est constitué de deux disques 74 en matière souple et élastique, caoutchouc par exemple, disposés de part et d'autre d'une couronne circulaire 75 dont la largeur est très légèrement supérieure au diamètre de la motte. La différence des rayons des disques et de la couronne correspond sensiblement à la hauteur de la motte. L'ensemble disque et couronne est entraîné en rotation à l'aide d'un moteur hydraulique 76 dont la vitesse est ajustée à la vitesse de défilement des godets, c'est-à-dire à celle du moteur hydraulique 54. Au moins, un des disques est dévoyé vers l'extérieur en amont du point de largage du plant par le godet 56, au moyen d'un galet 77 opérant sur la bordure interne du disque, afin de faciliter l'introduction de la motte, celle-ci venant, par sa base, en butée sur la périphérie de la couronne circulaire 75. Aussitôt cette introduction, le disque est ramené vers sa position normale et soumis à l'action d'une batterie de galets presseurs 78 d'axes rayonnants agissant sur la face externe du disque selon un rayon supérieur à celui de la couronne 75, lesdits galets étant répartis sur une portion de secteur circulaire ; en regard de celle-ci est montée une portion de rampe circulaire 79 sur laquelle s'appuie l'autre disque ; cette disposition assure un pinçage suffisant des mottes sans risque d'écrasement au cours du passage des disques entre ladite rampe et les galets presseurs. Le dispositif de retournement est monté sur le cadre rectangulaire constituant le châssis secondaire 69 ; sur ce même cadre est également fixé le dispositif de plantation E, lequel est constitué de deux disques 80 en matière souple et élastique telle que le caoutchouc par exemple, montés en contact l'un de l'autre. Ces disques sont destinés à saisir le feuillage de chaque plant au moment ou le dispositif de retournement va libérer la motte du plant par retour des disques 74 à la position normale d'écartement, c'est-à-dire après le dernier galet presseur 78. Afin de faciliter la prise en charge du feuillage, au moins un des disques 80 est dévoyé vers l'extérieur au moyen d'un galet 81 placé en amont du point de libération de la motte par le dispositif de retournement, ledit galet opérant sur la bordure interne du disque ; le disque est aussitôt ramené à sa position normale et subit l'action d'une batterie de galets presseurs 82 d'axes rayonnants répartis sur une portion de secteur circulaire ; en regard de celle-ci est montée une portion de rampe circulaire 83 sur laquelle vient en appui l'autre disque. Une telle disposition assure un pinçage suffisant du feuillage du plant sans risque de mâcher celui-ci tout au long de sa préhension. Le dernier galet presseur dans l'ordre d'intervention est placé à une distance de la verticale de plantation passant par le centre des disques, telle que ceux-ci reprenant leur position normale dans cette zone libèrent le plant en position parfaitement verticale au creux du sillon.

La plantation à la profondeur désirée des plants peut être déterminée d'une façon précise en réglant la position de l'axe de rotation des disques 80 par rapport à l'axe du dispositif de retournement d'une part et par rapport au sol d'autre part. La vitesse circonférencielle du dispositif de plantation est égale à la vitesse d'avancement de la machine : à cet effet, l'entraînement des disques 80 est assuré à partir de l'une des roues porteuses de la machine au moyen d'un arbre de transmission avec accouplements à la cardan.

Compte-tenu de la faible épaisseur du dispositif planteur, celui-ci peut s'inscrire entre les roues plombeuses 71, l'action de celles-ci pouvant ainsi s'exercer au plus près du point de dépose du plant en fond de sillon pour refermer celui-ci et immobiliser le plant.

L'invention ne se limite pas au mode de réalisation spécialement décrit : elle embrasse toutes les variantes possibles à condition que celles-ci ne soient pas en contradiction avec l'objet de chacune des revendications annexées à la présente description. C'est ainsi que, par exemple, les godets 56 peuvent défiler transversalement par rapport à l'avancement de la machine, et débiter dans une batterie de dispositifs de retournement et de plantation disposés à intervalles réguliers dans des plans verticaux parallèles audit déplacement.

La machine, suivant l'invention, peut être utilisée à la plantation de plants en mottes de toute nature.

## Revendications

1.- Machine de plantation de plants de légumes ou de fleurs cultivés en mottes dans des plateaux alvéolés, constituée d'un châssis principal équipé de roues porteuses et d'une ou plusieurs unités de plantation munies, chacune :
- d'un ensemble porte-plateaux et d'extraction des mottes (A),
- d'un ensemble (B) de prise en charge des mottes et de transfert,
- d'un ensemble de convoyage des mottes en vue de leur dépose au sol,
- d'un ensemble de préparation et de ragréage du sol, caractérisé en ce que l'ensemble de convoyage et de dépose au sol comprend un dispositif (D) de retournement des plants, associé à un dispositif planteur (E) assurant une parfaite verticalité de plantation du plant dans le sillon à la profondeur désirée en fonction de la nature des plants, ledit sillon étant refermé sitôt la dépose du plant.

2.- Machine de plantation de plants en mottes, selon la revendication 1, caractérisée en ce que le dispositif (D) de retournement des plants est constitué de deux disques (74) en matière souple et élastique disposés de part et d'autre d'une couronne circulaire (75) dont la largeur est très légèrement supérieure au diamètre de la motte, la différence des rayons des disques et de la couronne correspondant sensiblement à la hauteur de la motte, au moins un des disques (74) est dévoyé vers l'extérieur en amont du point de largage du plant par le godet (56) au moyen d'un galet (77) opérant sur la bordure interne du disque afin de faciliter l'introduction de la motte jusqu'à la mise en butée de sa base sur la périphérie de la couronne circulaire (75), lequel disque est ramené, sitôt cette introduction, vers sa position normale et soumis à l'action d'une batterie de galets presseurs (78) d'axes rayonnants agissant sur la face externe du disque selon un rayon supérieur à celui de la couronne (75) et répartis sur une portion de secteur circulaire en regard de laquelle est montée une portion de rampe circulaire (79) sur laquelle prend appui l'autre disque, l'action conjuguée des galets presseurs et de la rampe assurant un pinçage suffisant des mottes sans risque d'écrasement au cours du passage des disques entre ladite rampe et lesdits galets presseurs.

3.- Machine de plantation de plants en mottes, selon la revendication 2, caractérisée en ce que le dispositif (D) de retournement des plants est entraîné en rotation à l'aide d'un moteur hydraulique (76) dont la vitesse est ajustée à la vitesse de défilement des godets, c'est-à-dire à la vitesse du moteur hydraulique (54) commandant ce défilement.

4.- Machine de plantation de plants en mottes, selon la revendication 3, caractérisée en ce que la vitesse de défilement des godets (56) est ajustée à la vitesse d'avancement de la machine en fonction du pas de plantation à obtenir, en alimentant le moteur hydraulique (54) d'entraînement de la chaîne de manutention (50) portant les godets par un distributeur rotatif proportionnel (63) en liaison mécanique avec l'une des roues porteuses du châssis par l'intermédiaire d'un variateur de vitesse mécanique (64).

5.- Machine de plantation de plants en mottes, selon la revendication 1, caractérisée en ce que le dispositif planteur (E) est constitué de deux disques (80) en matière souple et élastique montés en contact l'un de l'autre, destinés à saisir le feuillage de chaque plant au moment où le dispositif (D) de retournement est sur le point de libérer la motte du plant par retour des disques (74) à la position normale d'écartement ; un des disques (80) est dévoyé vers l'extérieur en amont du point de libération de la motte par le dispositif (D) de retournement au moyen d'un galet (81) opérant sur la bordure interne du disque afin de faciliter la prise en charge du feuillage, lequel disque est aussitôt ramené vers sa position normale et subit l'action d'une batterie de galets presseurs (82) d'axes rayonnants agissant sur la face externe du disque et répartis sur une portion de secteur circulaire en regard de laquelle est montée une portion de rampe circulaire (83) sur laquelle prend appui l'autre disque, l'action conjuguée des galets presseurs et de la rampe assurant un pinçage suffisant du feuillage du plant sans risque de machure au cours du passage des disques entre ladite rampe et lesdits galets presseurs, le dernier de ceux-ci, dans l'ordre de leur intervention, étant placé à une distance de la verticale de plantation passant par le centre des disques, telle que les disques reprenant leur position normale dans cette zone libèrent le plant en position parfaitement verticale au creux du sillon.

6.- Machine de plantation de plants en mottes, selon la revendication 5, caractérisée en ce que le dispositif planteur (E) est entraîné en rotation à partir d'une des roues porteuses de la machine par l'intermédiaire d'un arbre de transmission avec accouplements à la cardan dans le but d'assurer une vitesse de rotation circonférencielle des disques égale à la vitesse d'avancement de la machine.

7.- Machine de plantation de plants en mottes, selon l'une quelconque des revendications 1 à 6, caractérisée en ce que le dispositif de retournement est alimenté en mottes au moyen d'une chaîne de manutention (50) portant, suspendus à intervalles réguliers, des godets (56) qui circulent selon une boucle fermée entre une roue dentée libre (51) et une roue dentée motrice (52) qui est clavetée sur la sortie d'arbre d'un moteur hydraulique (54) alimenté par un distributeur rotatif proportionnel (63) monté sur le châssis principal de la machine et en liaison mécanique avec l'une des roues porteuses par l'intermédiaire d'un variateur de vitesse mécanique (64).

8.- Machine de plantation de plants en mottes, selon la revendication 7, caractérisée en ce que la chaîne de manutention (50) circule dans un plan horizontal.

9.- Machine de plantation de plants en mottes, selon la revendication 7, caractérisée en ce qu'elle comporte une chaîne de manutention (50) dont le sens de translation est tel que les godets circulent de l'arrière vers l'avant de la machine sur la partie de trajectoire située en-dessous du plan d'ouverture des pinces (30) de l'ensemble (B) de transfert, et de l'avant vers l'arrière de la machine sur la partie de trajectoire disposée au-dessus des dispositifs de mise en terre, la partie ouvrante des godets étant celle qui est située en avant dans le sens de défilement de la chaîne.

FIG.1

FIG.2

A  B  C  D  E

A

B

C

D

E

_FIG.3_

_FIG.5_

56

81    78    77

E    74    75

80    82    D

76

80    83  81    79    74

_FIG.6_    75

80    82    78    77    74

E    D

_FIG.4_

FIG.7

EP 0 396 208 A2